# EUROPEAN PATENT APPLICATION

(11) **EP 4 496 086 A1**
(43) Date of publication of application: **22.01.2025**
(21) Application number: 24188817.1
(22) Date of filing: 16.07.2024
(51) Int. Cl.: H01M 50/178, H01M 50/183, H01M 50/19, H01M 50/519, H01M 50/528, H01M 50/533, H01M 50/553, H01M 50/557

(54) **BATTERY PACK**

(30) Priority: 21.07.2023 KR 20230095491; 19.03.2024 KR 20240037919
(71) Applicant: SAMSUNG SDI CO., LTD., Giheung-gu Yongin-si, Gyeonggi-do 17084 (KR)
(72) Inventor: An, Kangsik, 17084 Yongin-si, Gyeonggi-do (KR)
(74) Representative: Gulde & Partner

(57) **Abstract**

A battery pack (10) includes a battery cell (100), and a protection circuit module (200) connected to the battery cell (100), the battery cell (100) including an electrode assembly (110) and an electrode tab (120) extending from the electrode assembly (110), wherein the protection circuit module (200) includes a substrate (210) and a substrate tab (220) connected to the substrate (210), wherein the electrode tab includes an electrode sealing unit (1201) extending from a housing (140) of the electrode assembly and an electrode bending unit (1202) extending from the electrode sealing unit, wherein the electrode sealing unit is bendable between the substrate and the electrode assembly so that a first sealing surface (1201F1) of the electrode sealing unit faces a housing surface of the electrode assembly, and wherein a surface of the substrate faces a second sealing surface (1201F2) of the electrode sealing unit.

## Description

### BACKGROUND

### 1. Field

One or more embodiments relate to a battery pack.

### 2. Description of the Related Art

Secondary batteries are designed to be capable of charging and discharging and are used as energy sources for mobile devices, electric vehicles, hybrid vehicles, electric bicycles, and uninterruptible power supplies. Depending on the type of external devices to which they are applied, secondary batteries may be used in the form of a single battery or a module in which batteries are connected and bundled into one unit.

Meanwhile, as applications to which secondary batteries are applied increasingly require gradually larger capacities, the size of battery cells is also increasing to increase energy density. As a result, not only an overall length but also an overall size of a battery pack including the battery cells is increasing.

It was an object of the present invention to provide a battery pack with a reduced size and at the same time having a larger capacity and high energy density.

### SUMMARY

The present invention is set out in the appended set of claims, wherein the drawings and respective description relate to advantageous embodiments thereof.

The present invention is directed to a battery pack including a battery cell, and a protection circuit module connected to the battery cell, wherein the battery cell includes an electrode assembly and an electrode tab extending from the electrode assembly, wherein the protection circuit module includes a substrate and a substrate tab connected to the substrate, wherein the electrode tab includes an electrode sealing unit extending from a housing of the electrode assembly and an electrode bending unit extending from the electrode sealing unit, wherein the electrode sealing unit is bendable between the substrate and the electrode assembly so that a first sealing surface of the electrode sealing unit corresponds to a housing surface of the electrode assembly, and wherein a surface of the substrate corresponds to a second sealing surface of the electrode sealing unit.

The substrate may include a first substrate surface corresponding to a second sealing surface of the electrode sealing unit and a second substrate surface on an opposite side to the first substrate surface, wherein the second substrate surface is connected to the substrate tab.

A second space is in the substrate tab, and an end of the electrode bending unit may be located in the second space and connected to the substrate tab.

The substrate tab may include a substrate connection unit connected to the substrate, a first substrate bending unit extending from the substrate connection unit and being vertically bent with respect to the substrate connection unit, and a second substrate bending unit extending from the first substrate bending unit and being vertically bent with respect to the first substrate bending unit, wherein the substrate connection unit and the second substrate bending unit face each other, and wherein a second space is between the substrate connection unit and the second substrate bending unit.

The electrode bending unit may include a first electrode bending unit extending from the electrode sealing unit, a second electrode bending unit extending from the first electrode bending unit and being vertically bent with respect to the first electrode bending unit, and a third electrode bending unit extending from the second electrode bending unit and being vertically bent with respect to the second electrode bending unit.

The third electrode bending unit may be connected to the second substrate bending unit.

The electrode sealing unit and the third electrode bending unit may face each other, a first space may be between the electrode sealing unit and the third electrode bending unit, and a substrate is on the first space.

The battery pack may further include at least one tape to support and protect the battery cell and the protection circuit module.

The at least one tape may include a tape between the bent electrode sealing unit and the electrode assembly.

The at least one tape may include a tape between the bent electrode sealing unit and the substrate.

The at least one tape may include a tape covering the electrode assembly and the protection circuit module.

The battery pack may further include an insulating tape between the electrode sealing unit and the electrode bending unit.

A thickness of the insulating tape may be greater than a thickness of tape between the bent electrode sealing unit and the substrate.

A width of the substrate tab may be greater than a height of the substrate tab.

A thickness of the electrode sealing unit may be less than a thickness of the substrate and less than a thickness of the substrate tab.

A width of the substrate may be greater than a width of the electrode sealing unit.

### BRIEF DESCRIPTION OF THE DRAWINGS

Features will become apparent to those of skill in the art by describing in detail exemplary embodiments with reference to the attached drawings, in which:
FIG. 1 shows a battery pack according to one or more embodiments;
FIG. 2 is an exploded perspective view of the battery pack of FIG. 1;
FIG. 3 is an exploded perspective view of a battery cell according to one or more embodiments;
FIG. 4 is a diagram showing an assembled state of the battery cell of FIG. 3 according to one or more embodiments;
FIGS. 5 and 6 are cross-sectional views taken along line A-A' of FIG. 1; and
FIG. 7 is an enlarged assembled view of portion B of FIG. 2 according to one or more embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

To easily describe the relationship between elements or features illustrated in the drawings and other elements or features, spatially relative terms such as "below," "above," "lower," "upper," and the like may be used. Spatially relative terms are intended to include various orientations of a device in use or operation in addition to those shown in the drawings. For example, if the device in the drawings is turned over, other elements or features described as "below" or "lower" may face "above" the other elements or features. Accordingly, as illustrative terms, "down" and "lower" may include both up and down directions. A device may be oriented in different directions (e.g., rotated 90 degrees or in other directions) and the spatially relative descriptions used in the present disclosure should be interpreted accordingly. Similarly, if a first part is described as being disposed "above" a second part, this denotes that the first part is disposed above or below the second part.

In addition, the expression "viewed from a plane" refers to a view of an object from above, and the expression "in a schematic cross-section view" refers to a schematic cross-section taken by cutting the object vertically. The term "viewed from a side" denotes that a first object may be above, below or to a side of a second object and vice versa. Additionally, the terms "overlap" or "doubled" may include layer, stack, surface, extension, covering, or partially covering, or any other suitable term that would be understood by one of ordinary skill in the art. The expression "does not overlap" may include meanings such as "spaced apart from" or "separated from" and any other suitable equivalents recognized and understood by those skilled in the art. The terms "face" and "surface" may denote that a first object may directly or indirectly face a second object. If there is a third object between the first object and the second object, the first object and the second object face each other, but may be understood as indirectly facing each other.

If an element, layer, region, or component is referred to as being "formed," "connected," or "coupled" to another element, it may be said to be formed directly on a layer, region, or component, formed on another component, layer, region or component, or indirectly formed on, connected to, or coupled to another component. It also may be collectively referred to direct or indirect combinations or connections of elements, layers, regions, or components and integral or non-integral combinations or connections so that one or more elements, layers, regions, or components may be present. For example, if an element, layer, region, or component is referred to as being "electrically connected" or "electrically coupled" to another element, layer, region, or component, this means that the element, layer, region, or component may be directly electrically connected or coupled, or other elements, layers, regions, or components may be present. However, "direct connection" or "direct coupling" means that one component is directly connected or combined with another component without an intermediate component or exits on another component. Additionally, in the present specification, if a part of a layer, film, region, plate, etc. is formed in another part, the formation direction is not limited to an upper direction, and includes that the part is formed on a side or bottom. Conversely, if a part of a layer, film, region, plate, etc. is formed "under" another part, it includes not only a case in which the part is "immediately below" the other part, but also a case in which another part is present between the part and the other part. Meanwhile, other expressions that describe relationships between components, such as "between," "immediately between," "adjacent to," and "immediately adjacent to," may be interpreted similarly. Additionally, if an element or layer is referred to as being "between" two elements or layers, it may be an only element between the two elements or layers, or there may be other elements in therebetween.

For the purposes of the specification, expressions such as "at least one or more" or "anyone" do not limit the order of individual elements. For example, "at least one of X, Y and Z", "at least one of X, Y or Z", "at least one selected from the group consisting of" may include X alone, Y alone, Z alone, or any combination of two or more of X, Y, and Z. Similarly, expressions such as "at least one of A and B" and "at least one of A or B" may include A, B or A and B. In the present specification, the term "or" generally includes "and/or", and "and/or" includes any combination of one or more related list items. For example, an expression such as "A and/or B" may include A, B, or A and B.

Although the terms "first", "second", "third", etc. may be used herein to describe various elements, components, regions, layers, and/or sections, such elements, components, regions, layers, and/or cross-section are not limited by these terms. These terms are used to distinguish one element, component, region, layer, or cross-section from another element, component, region, layer, or cross-section. Accordingly, a first element, component, region, layer, or cross section described below may be referred to as a second element, component, region, layer, or cross section. Describing an element as a "first" element may not require or imply the presence of a second or another element. Terms such as "first," "second," etc. may be used herein to distinguish different categories or sets of elements in the present disclosure. For clarity, terms such as "first," "second," etc. may refer to "first category (or first set)," "second category (or second set)," etc., respectively.

The terms used in this application are only used to describe specific embodiments and are not intended to limit the disclosure. As used herein, singular terms are intended to include plural terms and plural terms are also intended to include the singular, unless the context clearly dictates otherwise. The terms "include," "provide," and "have" where used herein are meant to designate the presence of specified features, integers, or operations. These expressions do not exclude the presence or addition of one or more other functions, steps, operations, components, and/or groups thereof.

If one or more embodiments are implemented differently, a certain process sequence may be performed differently than a described order. For example, two processes described in succession may be performed substantially simultaneously or may be performed in an order opposite to that described.

As used herein, the terms "substantially," "about," and similar terms are used in terms of approximation and not in terms of degree and are intended to account for inherent variations in measured or calculated values that would be recognized by a person of ordinary skill in the art. As used herein, the term "about" or "approximately" includes the stated value and denotes within a permissible range of deviation (e.g., a range of deviation due to limitations of the measurement system) for a specific value as determined by an ordinary skill in the art taking into account the corresponding measurement and associated errors. For example, the term "about" may denote within one or more standard deviations or within ±30%, 20%, 10%, or 5% of a specified value.

Unless otherwise defined, all terms used herein, including technical or scientific terms, have the same meaning as commonly understood by one of ordinary skill in the technical field to which the present disclosure belongs. Terms, such as those defined in commonly used dictionaries shall be construed to have a meaning consistent with their meaning in the context of the relevant technology and/or this specification, and unless explicitly defined herein, it is not to be interpreted in an idealized or overly formal sense.

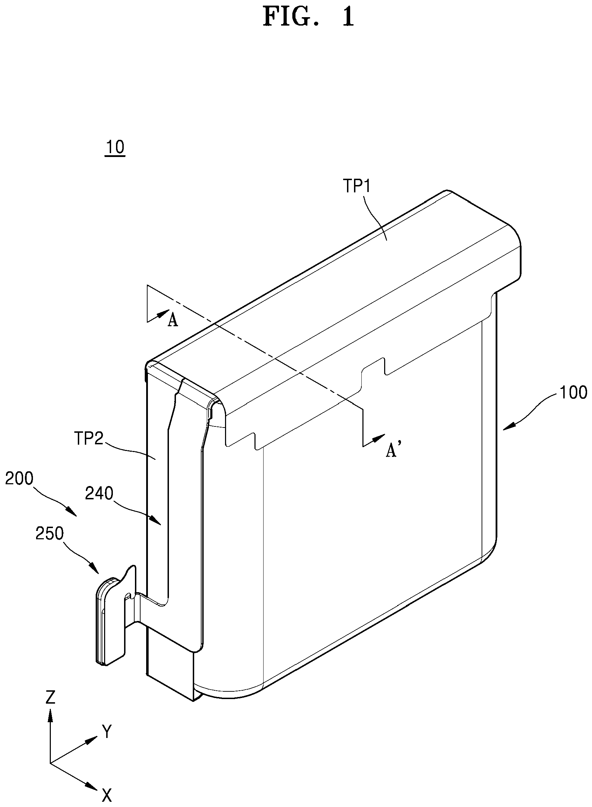

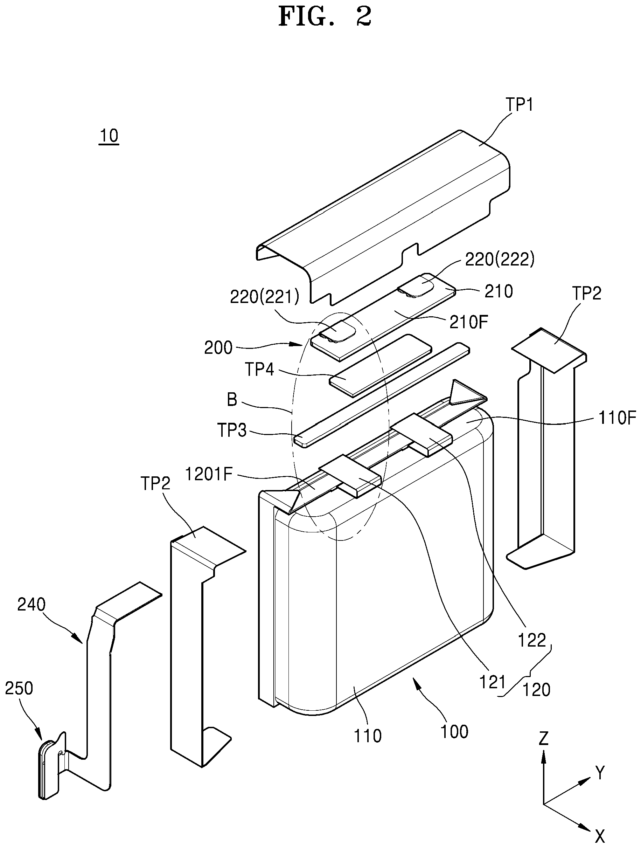

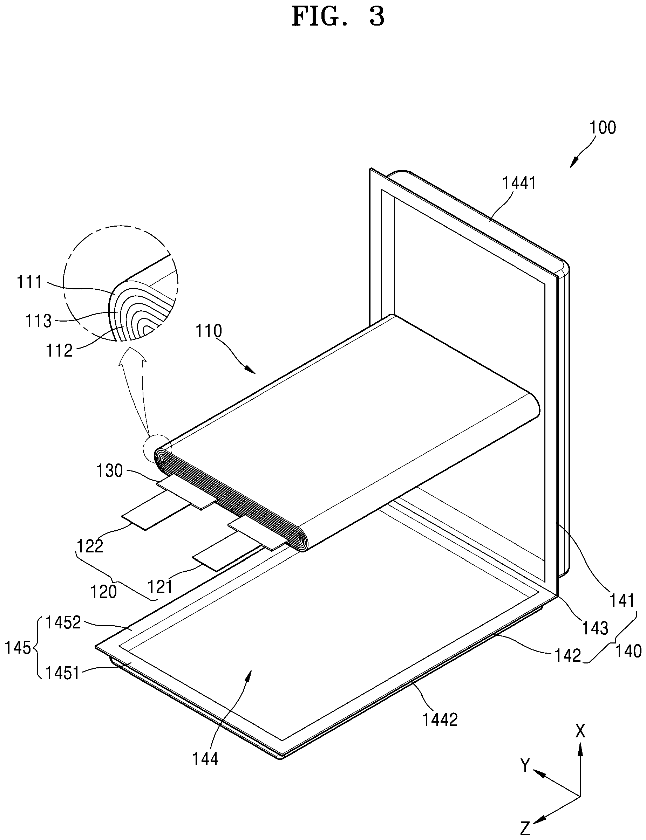

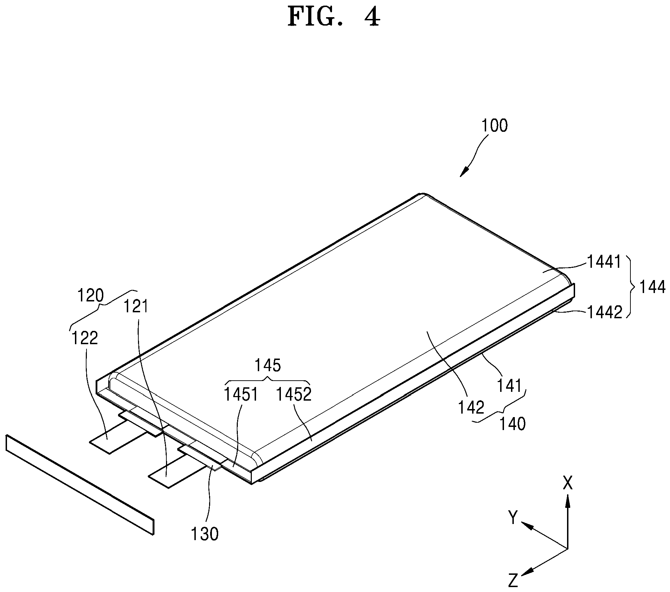

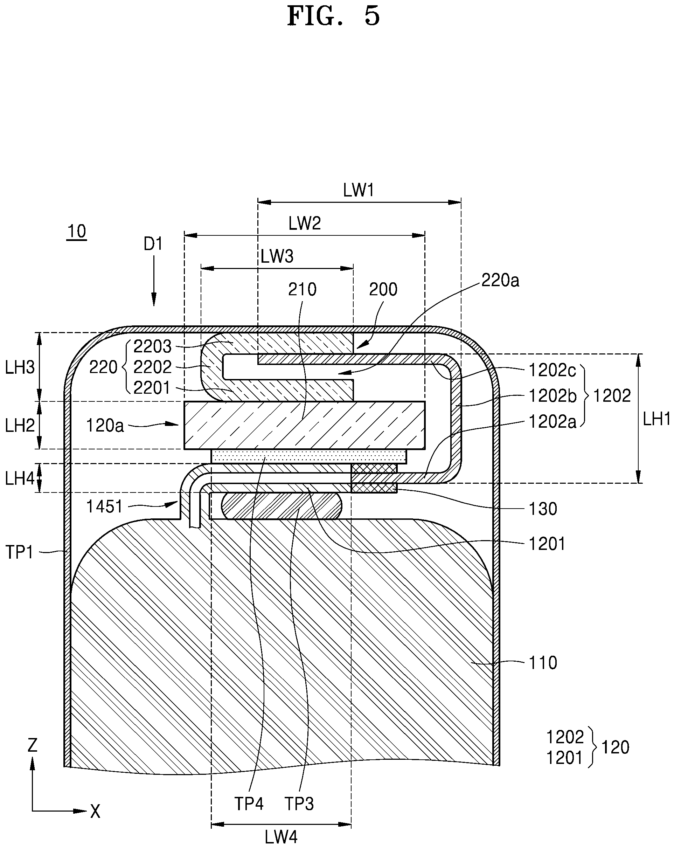

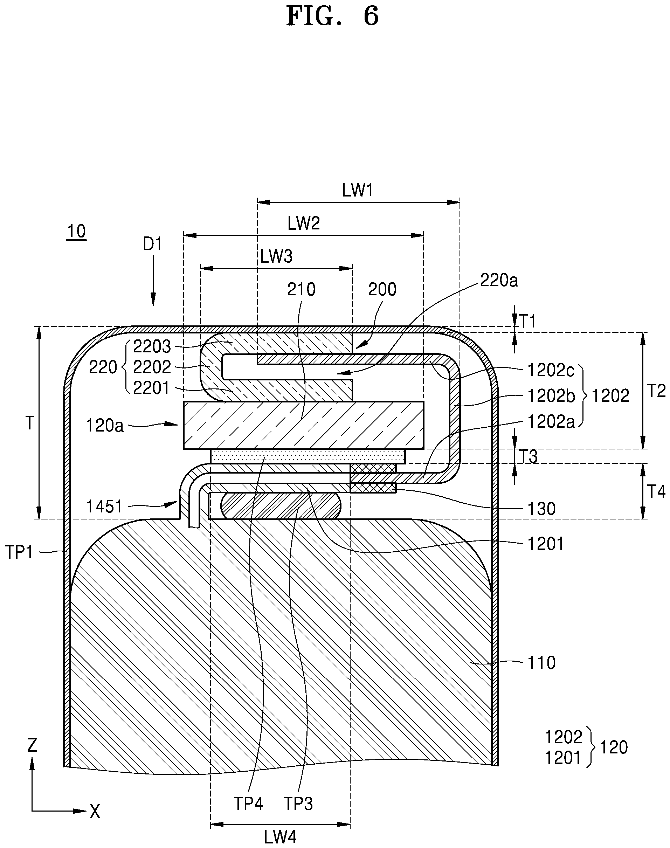

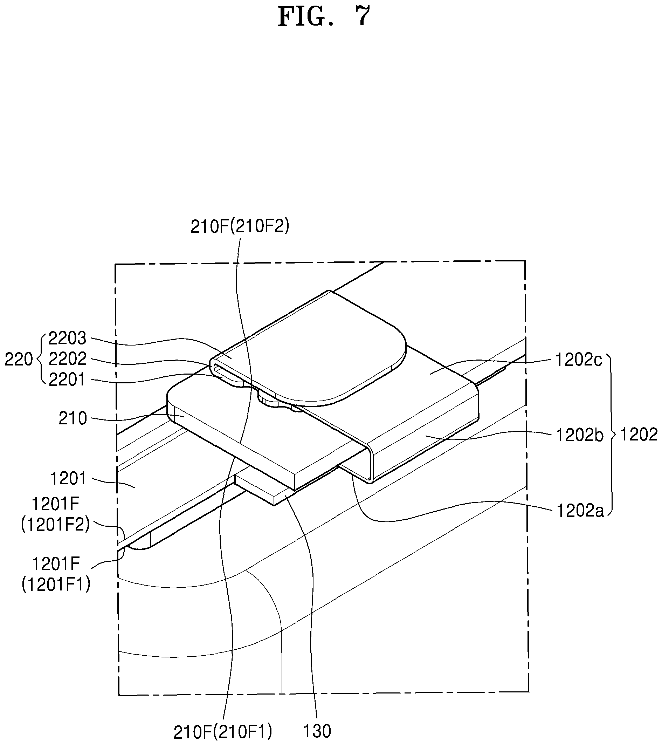

FIG. 1 shows a battery pack 10 according to one or more embodiments. FIG. 2 is an exploded perspective view of the battery pack 10 of FIG. 1. FIG. 3 is an exploded perspective view of a battery cell according to one or more embodiments. FIG. 4 is a diagram showing an assembled state of the battery cell of FIG. 3. FIGS. 5 and 6 are cross-sectional views taken along line A-A' of FIG. 1. FIG. 7 is an enlarged assembled view of portion B of FIG. 2 according to one or more embodiments.

The battery pack 10 may be a pouch-type battery and includes a battery cell 100 and a protection circuit module 200. For example, as shown in FIG. 1, the battery pack 10 may have flat front and back sides (e.g., both sides parallel to a YZ plane in FIG. 1). At least a portion of the battery pack 10 may have a curved shape. For example, both sides of the battery pack 10 (e.g., a side where an extension unit 240 is located and the opposite side thereof in FIG. 1) may have a curved shape. The battery pack 10 may have a dimension in which a thickness direction (e.g., an X-axis direction in FIG. 1) may be less than a width direction (e.g., in a Y-axis direction in FIG. 1).

The battery pack 10 includes a battery cell 100 (see FIG. 2) and a protection circuit module 200 connected to the battery cell 100 and including a substrate 210. The battery cell 100 may include an electrode assembly 110 and a housing 140 (see FIG. 3) surrounding the assembly 110, and the housing 140 may include a terrace unit 1451 corresponding to a short side of the battery cell 100 and a pair of side sealing units 1452 each connected to both ends of the terrace unit 1451 and corresponding to a pair of long sides of the battery cell 100.

The battery pack 10 may include at least one tape to support and protect the battery cell 100 and the protection circuit module 200. The at least one tape may be attached to at least one of the battery cell 100 and the protection circuit module 200 and may include an insulating material. For example, the tape may be on an outer side of the battery cell 100, between the battery cell 100 and the protection circuit module 200, or inside the protection circuit module 200. The tape may be a component that may be distinguished from the insulating tape 130 of the battery cell 100.

The battery cell 100 may include the electrode assembly 110, an electrode tab 120, the insulating tape 130, and the housing 140.

The electrode assembly 110 may include a first electrode plate 111 and a second electrode plate 112 having polarities opposite to each other, and a separator 113 between the first electrode plate 111 and the second electrode plate 112. The electrode assembly 110 may be formed into a roll type by rolling the first electrode plate 111, the second electrode plate 112, and the separator 113. For example, a winding axis (e.g., a central axis along which the first electrode plate 111, the second electrode plate 112, and the separator 113 are rolled) of the electrode assembly 110 may be parallel to a longitudinal direction (e.g., a Z-axis direction of FIG. 5) of the battery cell 100. In some embodiments, the electrode assembly 110 may be formed by stacking a plurality of first electrode plates 111, second electrode plates 112, and separators 113. In an implementation, the electrode assembly 110 may be a mixture of roll type and stack type. The first electrode plate 111 may be a cathode and the second electrode plate 112 may be an anode. In an implementation, the first electrode plate 111 may be an anode and the second electrode plate 112 may be a cathode.

The first electrode plate 111 may be formed by coating a first electrode active material, such as graphite or carbon to a first electrode current collecting plate including a metal foil, such as copper, copper alloy, nickel, or nickel alloy. The first electrode plate 111 may include a first uncoated portion, which is a region where the first electrode active material is not coated, and at least a portion of the first uncoated portion may include a first electrode tab 121. The first electrode tab 121 may be a path for current flow between the first electrode plate 111 and the first current collector. The first electrode tab 121 may be formed by cutting the first electrode plate 111 so that at least a portion of the first electrode plate 111 protrudes outward from the electrode assembly 110 in advance if manufacturing the first electrode plate 111. In some embodiments, the first electrode tab 121 may protrude further outward from the electrode assembly 110 than the separator 113 without a separate cutting process.

The second electrode plate 112 may be formed by coating a second electrode active material, such as a transition metal oxide to a second electrode current collector plate including a metal foil, such as aluminum or aluminum alloy. The second electrode plate 112 may include a second uncoated region, which is an area where the second electrode active material is not coated, and at least a portion of the second uncoated region may include a second electrode tab 122. The second electrode tab 122 may be a path for current flow between the second electrode plate 112 and a second current collector. The second electrode tab 122 may be formed by cutting the second electrode plate 112 so that at least a portion of the second electrode plate 112 protrudes outward from the electrode assembly 110 in advance if manufacturing the second electrode plate 112. In some embodiments, the second electrode tab 122 may protrude further outward from the electrode assembly 110 than the separator 113 without a separate cutting process.

The electrode assembly 110 may be surrounded by the housing 140. For example, as shown in FIG. 3, the electrode assembly 110 may have a size less than the housing 140 and may be accommodated in the housing 140. If the electrode assembly 110 is accommodated in the housing 140, the electrode tab 120 connected to the electrode assembly 110 may protrude to the outside of the housing 140 and be connected to the protection circuit module 200.

The electrode tab 120 may be connected to the electrode assembly 110. One end of the electrode tab 120 may extend from the electrode assembly 110. The electrode tab 120 may be drawn out from a terrace unit 1451 of the housing 140 if the housing 140 is coupled (e.g., if the first housing 141 and the second housing 142 are in contact with each other). For example, as shown in FIG. 5, the electrode tab 120 may include the first electrode tab 121 and the second electrode tab 122 having polarities opposite to each other and may be electrically connected to the first electrode plate 111 and the second electrode plate 112, respectively. Also, the electrode tab 120 may be connected to a substrate tab 220. For example, the first electrode tab 121 may be connected to a first substrate tab 221 and the second electrode tab 122 may be connected to a second substrate tab 222. The electrode tab 120 may be connected to the substrate tab 220, for example, through welding or bolting. The electrode tab 120 may include a conductive material such as a metal. The first electrode tab 121 and the second electrode tab 122 may be spaced apart from each other, and the first and second current collectors may be welded and connected to the first electrode tab 121 and the second electrode tab 122, respectively.

The insulating tape 130 may be attached to the electrode tab 120 to provide insulation and sealing between the electrode tab 120 and the housing 140. For example, as shown in FIG. 5, the insulating tape 130 may cover at least a portion of the electrode tab 120. The insulating tape 130 may be in contact with the electrode assembly 110 or adjacent to the electrode assembly 110. For example, as shown in FIG. 4, the insulating tape 130 may be outside the terrace unit 1451.

The electrode tab 120 may be bent one or more times. If the electrode tab 120 were to be connected to the substrate tab 220 of the protection circuit module 200, the electrode tab 120 may not extend straight in the longitudinal direction (e.g., Z-axis direction of FIG. 1) of the battery cell 100 but may be bent one or more times. For example, as shown in FIGS. 2 and 5, respectively, the electrode tab 120 may extend straight in the longitudinal direction of the battery cell 100 and then extend in a thickness direction of the battery cell 100 (e.g., an -X-axis direction in FIG. 2). The terrace unit 1451 may also be bent in the same direction as the electrode tab 120. With the electrode tab 120 bent, a fourth tape TP4 and the protection circuit module 200 may be sequentially placed thereon. The electrode tab 120 may then be bent again in the thickness direction of the battery cell 100 toward the substrate tab 220. That is, the electrode tab 120 may include a plurality of bending parts, and at least a part of the protection circuit module 200, such as the substrate 210, may be located between the plurality of bending parts. In an implementation, the electrode tab 120 may include the bending parts, and an overall length of the battery cell 100 and the battery pack 10 may be reduced.

The electrode tab 120 may include an electrode sealing unit 1201 (see FIG. 5) and an electrode bending unit 1202. The electrode bending unit 1202 may include a first electrode bending unit 1202a, a second electrode bending unit 1202b, and a third electrode bending unit 1202c.

The electrode tab 120 may include the electrode sealing unit 1201 extending from the electrode assembly 110 in the longitudinal direction of the battery cell 100 within the terrace unit 1451, a first electrode bending unit 1202a that is bent at an end of the electrode sealing unit 1201 and a portion thereof is within the terrace unit 1451, a second electrode bending unit 1202b bent at an end of the first electrode bending unit 1202a, and a third electrode bending unit 1202c bent at an end of the second electrode bending unit 1202b.

The electrode sealing unit 1201 may be a part of the electrode tab 120 extending from the electrode assembly 110. For example, as shown in FIG. 5, the electrode sealing unit 1201 may extend from the electrode assembly 110, may be inserted between the terrace parts 1451, and may extend in the thickness direction (e.g., the X-axis direction of FIG. 5) of the battery cell 100.

The first electrode bending unit 1202a may extend from the end of the electrode sealing unit 1201 in a direction parallel to a direction in which the electrode sealing unit 1201 extends. For example, the first electrode bending unit 1202a may extend from the end of the electrode sealing unit 1201 in the thickness direction of the battery cell 100 (for example, the X-axis direction in FIG. 5). For example, the first electrode bending unit 1202a may extend parallel to the electrode sealing unit 1201. A fourth tape TP4 may be present on the first electrode bending unit 1202a (in the Z-axis direction of FIG. 5). The first electrode bending unit 1202a may be partially within the terrace unit 1451 and partially wrapped with the insulating tape 130. Another part of the first electrode bending unit 1202a may be exposed to the outside of the terrace unit 1451 and the insulating tape 130. The first electrode bending unit 1202a may be spaced apart from an upper surface of the electrode assembly 110 by a length of a pre-bent portion of the electrode sealing unit 1201. A third tape TP3 may be present in a space between the first electrode bending unit 1202a and the electrode assembly 110.

The second electrode bending unit 1202b may extend from an end of the first electrode bending unit 1202a in a direction crossing the direction in which the first electrode bending unit 1202a extends. For example, the second electrode bending unit 1202b may be bent at the end of the first electrode bending unit 1202a (e.g., the right end in FIG. 5) and extend in the longitudinal direction of the battery cell 100 (e.g., the Z-axis direction in FIG. 5). For example, the second electrode bending unit 1202b may extend perpendicular to the first electrode bending unit 1202a. A length of the second electrode bending unit 1202b may be less than a length of the electrode sealing unit 1201.

The second electrode bending unit 1202b may be located between the substrate 210 and a side surface of the first tape TP1 in a width direction of the battery pack 10 (e.g., the X-axis direction in FIG. 9). The second electrode bending unit 1202b may be spaced apart from the side surface of the substrate 210 and the first tape TP1 and may not interfere with the substrate 210 and the first tape TP1 even if an impact is applied from the outside. The second electrode bending unit 1202b may be between the upper surface of the battery cell 100 and an upper surface of the first tape TP1 in the longitudinal direction of the battery pack 10 (e.g., the Z-axis direction in FIG. 5). The second electrode bending unit 1202b may be spaced apart from the upper surface of the battery cell 100 and the upper surface of the first tape TP1. Thus, it may not interfere with the battery cell 100 and the first tape TP1 even if an external impact is applied.

The third electrode bending unit 1202c may extend from an end of the second electrode bending unit 1202b in a direction crossing the direction in which the second electrode bending unit 1202b extends. For example, the third electrode bending unit 1202c may be bent at an upper surface of the second electrode bending unit 1202b and extend in the thickness direction of the battery cell 100. For example, the third electrode bending unit 1202c may extend perpendicular to the second electrode bending unit 1202b. The third electrode bending unit 1202c may be bent from the second electrode bending unit 1202b toward the first electrode bending unit 1202a. At least a portion of the first electrode bending unit 1202a and the third electrode bending unit 1202c may overlap each other in the longitudinal direction of the battery cell 100. The third electrode bending unit 1202c may be on the substrate 210 of the protection circuit module 200.

The third electrode bending unit 1202c may be connected to the substrate tab 220. At least a portion of the third electrode bending unit 1202c may be inserted into the substrate tab 220 and may contact the substrate tab 220. Thus, the electrode tab 120 and the substrate tab 220 may be electrically connected.

The first electrode bending unit 1202a and the third electrode bending unit 1202c may be spaced apart, and at least a portion of the protection circuit module 200 and a tape may be present therebetween. For example, the first electrode bending unit 1202a and the third electrode bending unit 1202c may extend parallel to each other (e.g., parallel to the thickness direction of the battery cell 100 or the X-axis direction in FIG. 5) and may be spaced apart by a length of the second electrode bending unit 1202b. The fourth tape TP4, the substrate 210, and a part of the substrate tab 220 (e.g., a substrate connection unit 2201) may be present between the first electrode bending unit 1202a and the third electrode bending unit 1202c.

In an implementation, the electrode tab 120 may include one or more bending units, and longitudinal dimensions of the battery cell 100 and the battery pack 10 may be reduced. In addition, the protection circuit module 200 and the tape may be located in a space formed between the plurality of bending units of the electrode tab 120, and thus, the configuration of the battery pack 10 may be concentrated in a relatively small space.

Although only the first electrode tab 121 is shown in the drawing, the second electrode tab 122 may also include the same bending structure and connection structure with the substrate tab 220 as the first electrode tab 121. That is, the second electrode tab 122 may also include an electrode sealing unit 1201, a first electrode bending unit 1202a, a second electrode bending unit 1202b, and a third electrode bending unit 1202c.

Referring to FIG. 3, the housing 140 may include a flexible material. The housing 140 may include an insulating layer formed on both sides of a thin metal layer such as an aluminum layer, and may be formed through a forming process such as drawing. The housing 140 may accommodate the electrode assembly 110 therein, and edges thereof may be sealed to prevent external foreign substances from entering the electrode assembly 110.

The housing 140 may include a first housing 141, a second housing 142, a folding unit 143, an internal space 144, and a sealing unit 145.

The first housing 141 and the second housing 142 may each accommodate the electrode assembly 110 therein and may be folded relative to each other around the folding unit 143. The first housing 141 may include a first internal space 1441 and the second housing 142 may include a second internal space 1442. The first housing 141 and the second housing 142 may be connected to each other through the folding unit 143. If the electrode assembly 110 is accommodated in one of the first housing 141 and the second housing 142, the other housing covers the corresponding housing, and thus, the internal space 144 in which the electrode assembly 110 is accommodated may be formed. For example, the folding unit 143 may be adjacent to a surface opposite to the surface of the electrode assembly 110 on which the electrode tab 120 is formed.

The sealing unit 145 may be formed in the first housing 141 and the second housing 142, respectively. The sealing unit 145 may be formed along an outer edge of the first housing 141 and an outer edge of the second housing 142. For example, as shown in FIG. 3, the sealing unit 145 may be formed on a pair of long sides of the first housing 141 and the second housing 142 and short sides except for the short side on which the folding unit 143 may be formed, respectively. In an implementation, the first housing 141 and the second housing 142 may be folded, and the sealing unit 145 included in the first housing 141 and the sealing unit 145 included in the second housing 142 may contact each other, thereby sealing a space between the first housing 141 and the second housing 142.

The sealing unit 145 may include the terrace unit 1451 and a side sealing unit 1452.

The terrace unit 1451 may be a portion from which the electrode tab 120 is drawn out and may correspond to one of a pair of short sides of the housing 140. For example, the terrace unit 1451 may be formed adjacent to one surface of the electrode assembly 110 from which the electrode tab 120 extends and may be formed at the upper surface of the battery cell 100 in the longitudinal direction of the battery cell 100. The terrace unit 1451 may extend in a direction intersecting the electrode tab 120 and seal the first housing 141 and the second housing 142. The terrace unit 1451 may surround at least a portion of the electrode tab 120. For example, as shown in FIG. 5, the terrace unit 1451 may surround a portion of the electrode tab 120 extending from the electrode assembly 110. That is, the terrace unit 1451 of the first housing 141 and the second housing 142 may be in contact with each other, and the electrode sealing unit 1201 of the electrode tab 120 and the first electrode bending unit 1202a may pass between contact surfaces of the terrace units 1451. The electrode tab 120 may be firmly supported on the terrace unit 1451.

Referring to FIGS. 3 and 4, the side sealing unit 1452 may extend in a direction crossing the terrace unit 1451. For example, the side sealing unit 1452 may be formed to correspond to a pair of long sides of the housing 140. Each side sealing unit 1452 may be connected to an end of the terrace unit 1451 and an end of the folding unit 143. The terrace unit 1451 and the pair of side sealing units 1452 may intersect each other perpendicularly.

The terrace unit 1451 and the side sealing unit 1452 may be folded. For example, as shown in FIG. 4, if the first housing 141 and the second housing 142 are folded, the side sealing units 1452 formed on the pair of long sides of the battery cell 100 may each be folded upward (e.g., in the X-axis direction of FIG. 4). The terrace unit 1451 may be folded upward while the pair of side sealing units 1452 are folded. That is, after the pair of side sealing units 1425 are folded upward toward the both sides of the battery cell 100, the terrace unit 1451 may be folded toward one side of the battery cell 100 where the electrode tab 120 is located.

The protection circuit module 200 may control charging and discharging operations of the battery cell 100 to prevent overdischarging or overcharging of the battery cell 100. The protection circuit module 200 may be connected to the battery cell 100 through the electrode tab 120. The protection circuit module 200 may be located above the battery cell 100 and may not be in direct contact with other parts of the battery pack 10 due to the tape.

The protection circuit module 200 may include the substrate 210, the substrate tab 220, an extension unit 240, and a connector 250.

The substrate 210 may support other components of the protection circuit module 200 (e.g., the substrate tab 220, the extension unit 240, etc.) and include circuit patterns and components. The substrate 210 may be a printed circuit board (PCB or FPCB) and may be on the battery cell 100. For example, as shown in FIG. 5, the substrate 210 may be between the fourth tape TP4 and the substrate tab 220. The substrate 210 may have a rectangular shape extending in a width direction of the battery cell 100 (for example, the Y-axis direction in FIG. 2).

One or more substrate tabs 220 may be located on the substrate 210 and may be connected to the electrode tab 120. The substrate tab 220 may include a conductor that may be electrically connected to the electrode tab 120, and may include, for example, nickel, copper, or aluminum.

For example, as shown in FIG. 2, two substrate tabs 220 may be located on an upper surface of the substrate 210 and spaced apart from each other. The number of substrate tabs 220 may be the same as the number of electrode tabs 120. The substrate tab 220 may be formed at a position corresponding to the electrode tab 120, may be connected to the electrode tab 120 through welding, etc., and may electrically connect the battery cell 100 and the protection circuit module 200. The substrate tab 220 may include the first substrate tab 221 connected to the first electrode tab 121 and the second substrate tab 222 connected to the second electrode tab 122.

The substrate tab 220 may include a plurality of bending units. For example, the substrate tab 220 may include a substrate connection unit 2201, a first substrate bending unit 2202, and a second substrate bending unit 2203. For example, as shown in FIG. 5, the substrate connection unit 2201 may be located on the upper surface of the substrate 210 and extend in a width direction of the substrate 210 (or a thickness direction of the battery cell 100 or the X-axis direction in FIG. 5). The substrate connection unit 2201 may extend opposite to a direction in which the first substrate bending unit 2202 extends.

The first substrate bending unit 2202 may be bent at an end of the substrate connecting unit 2201 and may extend in a direction different from the substrate connecting unit 2201. For example, the first substrate bending unit 2202 may extend in a height direction of the battery cell 100 (e.g., the Z-axis direction in FIG. 5). The first substrate bending unit 2202 may be on the substrate 210. The substrate connection unit 2201 and the second substrate bending unit 2203 may be spaced apart by the first substrate bending unit 2202, and the electrode tab 120 may be inserted therebetween.

The second substrate bending unit 2203 may be bent at an end of the first substrate bending unit 2202 and may extend in a direction different from the first substrate bending unit 2202. For example, the second substrate bending unit 2203 may extend in the thickness direction of the battery cell 100 (e.g., the Z-axis direction in FIG. 5). The second substrate bending unit 2203 may overlap at least a portion of the substrate connecting unit 2201 and the battery cell 100 in the height direction. The second substrate bending unit 2203 may be connected to the electrode tab 120. For example, as shown in FIG. 5, a lower surface of the second substrate bending unit 2203 may be in contact with an upper surface of the third electrode bending unit 1202c, thus the electrode tab 120 may be connected to the substrate tab 220.

Although only the first substrate tab 221 is shown in the drawing, the second substrate tab 222 may also have the same bending structure and connection structure as the second substrate tab 221 and the substrate tab 220. That is, the second substrate tab 222 may also include a substrate connecting unit 2201, a first substrate bending unit 2202, and a second substrate bending unit 2203.

The extension unit 240 may connect the substrate 210 and the connector 250 (see FIG. 2). For example, one end of the extension unit 240 may be in contact with the upper surface of the substrate 210 and the other end may be connected to the connector 250. The extension unit 240 may have a width equal to or less than a width of the protection circuit module 200 and may include a deformable flexible material. The extension unit 240 may extend downward along a side of the battery cell 100, and the connector 250 may be located at an end thereof. The connector 250 may connect the protection circuit module 200 with an external device of the battery pack 10, such as an application or a controller.

The battery pack 10 may include a tape. The tape may be located between the battery cell 100 and the protection circuit module 200 or outside the battery cell 100 and/or the protection circuit module 200. The tape may be attached to at least one of the battery cell 100 and the protection circuit module 200. The tape insulates the battery cell 100 and the protection circuit module 200 and may protect the battery cell 100 and the protection circuit module 200 from external shock. The tape may include an insulating and/or flame retardant material, for example polytetrafluoroethylene. The tape may include a first tape TP1, a second tape TP2, a third tape TP3, and a fourth tape TP4.

The second tape TP2 may be attached to both sides of the battery cell 100, respectively. For example, as shown in FIG. 1, the second tape TP2 may be present between the extension unit 240 of the protection circuit module 200 and the battery cell 100. The second tape TP2 may prevent the extension unit 240 from directly contacting the battery cell 100. An upper part of the second tape TP2 may be located on the upper surface of the battery cell 100 and the lower part may be located on a lower surface of the battery cell 100. A pair of second tapes TP2 may be attached to both sides of the battery cell 100 and may respectively cover a pair of corner portions.

The second tape TP2 may cover the sealing unit 145. For example, if the side sealing unit 1452 is folded, the second tape TP2 may cover the outside of the side sealing unit 1452.

The first tape TP1 may be located on the battery cell 100 and cover the protection circuit module 200 and the battery cell 100. For example, as shown in FIG. 1, the first tape TP1 may be located on the protection circuit module 200 if the battery cell 100 and the protection circuit module 200 are connected and cover upper parts of front and rear surfaces of the battery cell 100. Therefore, as shown in FIG. 5, the first tape TP1 may be positioned to surround the components as well as the protection circuit module 200 and the electrode tab 120. The first tape TP1 may be separated from the protection circuit module 200 while the first tape TP1 is attached to the battery cell 100.

The third tape TP3 may be positioned on the upper end of the battery cell 100 before the electrode tab 120 and the terrace unit 1451 may be folded to prevent the upper end of the battery cell 100 from directly contacting the electrode tab 120. For example, as shown in FIG. 5, the third tape TP3 may have a length corresponding to a width of the battery cell 100 (e.g., the Y-axis direction in FIG. 2) and may be located on the upper end of the battery cell 100. In this state, the electrode tab 120 and the terrace unit 1451 may be folded toward the upper surface of the housing 140 (e.g., the first housing 141), and the side sealing units 1452 on both sides may be also folded inward, respectively.

The fourth tape TP4 may be positioned on the electrode tab 120 and/or the insulating tape 130. For example, as shown in FIG. 5, the fourth tape TP4 may be located on the electrode tab 120 and the terrace unit 1451 if the electrode tab 120 and the terrace unit 1451 are in a bent state. The fourth tape TP4 may cover a portion of the electrode tab 120, the terrace unit 1451, the insulating tape 130, and the side sealing units 1452 located on both sides of the battery cell 100, and may secure airtightness and insulation between the components.

The electrode sealing part 1201 may be between the substrate 210 and the electrode assembly 110, and the first sealing surface 1201F1 of the electrode sealing part 1201 may be connected to the housing of the electrode assembly 110. It may be bent and formed to correspond to the surface 110F. Additionally, the substrate 210 may be disposed so that the substrate surface 210F corresponds to the second sealing surface 1201F2 (see FIG. 7) of the electrode sealing unit 1201.

In this way, because the electrode sealing unit 1201 is formed by being bent in a direction in which a housing surface 110F of the electrode assembly 110 is located, compared to the case where the electrode sealing unit 1201 is not bent and extends perpendicularly to the housing surface 110F of the electrode assembly 110, a thickness T occupied by an electrode tab unit and a protection circuit module unit of FIG. 6 may be reduced. Through this, a volume occupied by the electrode tab unit and the protection circuit module unit of an entire battery pack may be reduced, thereby reducing an overall length and size of the battery pack. At the same time, the volume of the electrode assembly may be increased relative to the same size of the battery pack, thereby increasing the capacity of the battery pack.

In addition, a substrate surface 210F of a substrate may be arranged to correspond to a second sealing surface 1201F2 of the electrode sealing unit 1201 so that the substrate 210 may not be located between the electrode tab 120 and the electrode assembly 110 but on an opposite side of the electrode assembly 110 with respect to the bent electrode tab 120, and thus, the possibility of battery efficiency degradation due to unnecessary electrical connection between the substrate 210 and the electrode assembly 110 may be reduced or completely prevented.

According to an embodiment, the substrate 210 may include a first substrate surface 210F1 disposed to correspond to a second sealing surface 1201F2 of the electrode sealing unit 1201 and a second substrate surface 210F2 formed on an opposite side of the first substrate surface 210F1, and the second substrate surface 210F2 may be connected to the substrate tab 220. See FIG. 7. The substrate 210 may face the electrode sealing unit 1201 through the first substrate surface 210F1 and at the same time, cover the electrode sealing unit 1201 in a first direction D1. Additionally, the substrate 210 may be electrically connected to the substrate tab 220 by contacting the substrate tab 220 through the second substrate surface 210F2.

A second space 220a may be formed in the substrate tab 220, and an end of the electrode bending unit 1202 may be disposed in the second space 220a and may be connected to the substrate tab 220.

For example, the substrate tab 220 may include a substrate connecting unit 2201 connected to the substrate 210, a first substrate bending unit 2202 extending from the substrate connecting unit 2201 and being vertically bent with respect to the substrate connecting unit 2201, and a second substrate bending unit 2203 extending from the first substrate bending unit 2202 and being vertically bent with respect to the first substrate bending unit 2202. The substrate connecting unit 2201 and the second substrate bending unit 2203 may be arranged to face each other, and a second space 220a (see, e.g., FIG. 5) may be formed between the substrate connecting unit 2201 and the second substrate bending unit 2203.

The width of the substrate tab 220 may be greater than a height of the substrate tab 220.

The electrode bending unit 1202 may include a first electrode bending unit 1202a formed by extending from the electrode sealing unit 1201, a second electrode bending unit 1202b extending from the first electrode bending unit 1202a and being vertically bent with respect to the first electrode bending unit 1202a, and a third electrode bending unit 1202c extending from the second electrode bending unit 1202b and being vertically bent with respect to the second electrode bending unit 1202b.

In an embodiment, the third electrode bending unit 1202c may be connected to the second substrate bending unit 2203. In addition, the electrode sealing unit 1201 and the third electrode bending unit 1202c may be formed to face each other, a first space 120a may be formed between the electrode sealing unit 1201 and the third electrode bending unit 1202c, and the substrate 210 may be disposed on the first space 120a.

The width of the substrate 210 may be greater than a width of the electrode sealing unit 1201.

The third tape TP3 may be disposed between the bent electrode sealing unit 1201 and the electrode assembly 110. The third tape TP3 may maintain an adhered state with the electrode sealing unit 1201 and the electrode assembly 110.

The fourth tape TP4 may be disposed between the bent electrode sealing unit 1201 and the substrate 210. The fourth tape TP4 may maintain an adhered state with the electrode sealing unit 1201 and the substrate 210.

The insulating tape 130 may be disposed between the electrode sealing unit 1201 and the electrode bending unit 1202. The thickness of the insulating tape 130 may be greater than a thickness of the tape between the bent electrode sealing unit 1201 and the substrate 210. With the insulating tape 130, it may be possible to prevent the electrode bending unit 1202 formed by extending from the electrode sealing unit 1201 from contacting and electrically connecting the substrate 210 or the electrode assembly 110.

According to an embodiment, the battery pack may include the first tape TP1 covering the electrode assembly 110 and the protection circuit module 200. At this time, the thickness T1 of the first tape TP1 may be greater than a thickness T3 of the fourth tape TP4. The first tape TP1 may be formed to cover the electrode tab 120 and the protection circuit module 200, and thus, may protect the electrode tab 120 and the protection circuit module 200 from damage by an external impact. Accordingly, the thickness of the first tape TP1 may be greater than the thickness of the fourth tape TP4 disposed between the substrate 210 and the electrode sealing unit 1201 to insulate the two components.

The thickness of the electrode sealing unit 1201 may be less than a thickness of the substrate 210 and less than a thickness of the substrate tab 220.

A width LW1 (see, e.g., FIG. 5) of the electrode tab 120 may be greater than a height LH1 of the electrode tab 120. Through this, the thickness T occupied by the electrode tab unit and the protection circuit module unit may be relatively reduced, which may contribute to the compactization and capacity improvement of the battery pack.

Additionally, a width LW2 of the substrate 210 may be greater than a height LH2 of the substrate 210. Through this, the thickness T occupied by the electrode tab unit and the protection circuit module unit may be relatively reduced, which may contribute to the compactization and capacity improvement of the battery pack.

Additionally, a width LW3 of the substrate tab 220 may be greater than a height LH3 of the substrate tab 220. Through this, the thickness T occupied by the electrode tab unit and the protection circuit module unit may be relatively reduced, which may contribute to the compactization and capacity improvement of the battery pack.

A thickness T4 of the bent electrode sealing unit 1201 may be less than a thickness T2 of the substrate 210 and the substrate tab 220. The thickness T occupied by the electrode tab unit and the protective circuit module unit may be relatively further reduced by bending the electrode sealing unit 1201 as much as possible to be less than the thickness T2 of the substrate 210 and the substrate tab 220, thereby contributing to the compactization and capacity improvement of the battery pack.

A height LH4 of the electrode sealing unit 1201 may be greater than a width LW4 of the electrode sealing unit 1201. Additionally, the width LW2 of the substrate 210 may be greater than the width LW4 of the electrode sealing unit 1201. The substrate 210 may completely cover the electrode sealing unit 1201 in the first direction D1 (in the X-axis direction in FIG. 5), and thus, a phenomenon in which the electrode sealing unit 1201 and the substrate tab 220 come into contact and are electrically connected to each other may be prevented. In addition, the substrate 210 may press the electrode sealing unit 1201, which is in a bent state, in a direction where the electrode assembly 110 is located, and thus, the electrode sealing unit 1201 may have a completely fixed structure between the substrate 210 and the electrode assembly 110 in the bent state.

In order to reduce an overall length of the battery pack, the battery pack may be formed into a horizontal structure by bending terrace units of the battery cells, thereby reducing the overall size of the battery pack and increasing the capacity of the battery pack.

Example embodiments have been disclosed herein, and although specific terms may be employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A battery pack (10), comprising:
a battery cell (100); and
a protection circuit module (200) connected to the battery cell (100), wherein the battery cell (100) includes:
an electrode assembly (110); and
an electrode tab (120) extending from the electrode assembly (110),
wherein the protection circuit module (200) includes a substrate (210) and a substrate tab (220) connected to the substrate (210),
wherein the electrode tab (120) includes: an electrode sealing unit (1201) extending from a housing (140) of the electrode assembly (110); and an electrode bending unit (1202) extending from the electrode sealing unit (1201),
wherein the electrode sealing unit (145) is bendable between the substrate (210) and the electrode assembly (110) so that a first sealing surface (1201F1) of the electrode sealing unit (1201) corresponds to a housing surface (110F) of the electrode assembly (110), and
wherein a surface of the substrate (210F) corresponds to a second sealing surface (1201F2) of the electrode sealing unit (1201).

2. The battery pack (10) as claimed in claim 1, wherein the substrate (210) includes:
a first substrate surface (210F1) corresponding to a second sealing surface (1201F2) of the electrode sealing unit (1201); and
a second substrate surface (210F2) on an opposite side to the first substrate surface (210F1), and
wherein the second substrate surface (210F2) is connected to the substrate tab (220).

3. The battery pack (10) as claimed in claim 2, wherein:
a second space (220a) is in the substrate tab (220), and
an end of the electrode bending unit (1202) is located in the second space (220a) and connected to the substrate tab (220).

4. The battery pack (10) as claimed in claim 2, wherein the substrate tab (220) includes:
a substrate (210) connection unit (2201) connected to the substrate (210);
a first substrate bending unit (2202) extending from the substrate (210) connection unit (2201) and being vertically bent with respect to the substrate (210) connection unit (2201); and a second substrate bending unit (2203) extending from the first substrate bending unit (2202) and being vertically bent with respect to the first substrate bending unit (2202),
wherein the substrate (210) connection unit (2201) and the second substrate bending unit (2203) face each other, and
wherein a second space (220a) is between the substrate (210) connection unit (2201) and the second substrate bending unit (2203).

5. The battery pack (10) as claimed in claim 4, wherein the electrode bending unit (1202) includes:
a first electrode bending unit (1202a) extending from the electrode sealing unit (1201);
a second electrode bending unit (1202b) extending from the first electrode bending unit (1202a) and being vertically bent with respect to the first electrode bending unit (1202a); and
a third electrode bending unit (1202c) extending from the second electrode bending unit (1202b) and being vertically bent with respect to the second electrode bending unit (1202b).

6. The battery pack (10) as claimed in claim 5, wherein:
the electrode sealing unit (1201) and the third electrode bending unit (1202c) face each other,
a first space (120a) between the electrode sealing unit (1201) and the third electrode bending unit (1202c), and
a substrate (210) is on the first space (120a).

7. The battery pack (10) as claimed in any of claims 1 to 6, further comprising at least one tape to support and protect battery the battery cell (100) and the protection circuit module (200).

8. The battery pack (10) as claimed in claim 7, wherein the at least one tape includes a tape between the bent electrode sealing unit (1201) and the electrode assembly (110).

9. The battery pack (10) as claimed in claim 7, wherein the at least one tape includes a tape between the bent electrode sealing unit (1201) and the substrate (210).

10. The battery pack (10) as claimed in claim 7, wherein the at least one tape includes a tape covering the electrode assembly (110) and the protection circuit module (200).

11. The battery pack (10) as claimed in any of claims 1 to 10, further comprising:
an insulating tape (130) located between the electrode sealing unit (1201) and the electrode bending unit (1202).

12. The battery pack (10) as claimed in claim 11, wherein a thickness of the insulating tape (130) is greater than a thickness of the tape between the bent electrode sealing unit (1201) and the substrate (210).

13. The battery pack (10) as claimed in any of claims 1 to 12, wherein a width of the substrate tab (220) is greater than a height of the substrate tab (220).

14. The battery pack (10) as claimed in any of claims 1 to 13, wherein a thickness of the electrode sealing unit (1201) is less than a thickness of the substrate (210) and less than a thickness of the substrate tab (220).

15. The battery pack (10) as claimed in any of claims 1 to 14, wherein a width of the substrate (210) is greater than a width of the electrode sealing unit (1201).
